# EUROPEAN PATENT SPECIFICATION

(11) **EP 1 498 460 B1**
(45) Date of publication and mention of the grant of the patent: **04.04.2007**
(21) Application number: 03747218.0
(22) Date of filing: 14.04.2003
(51) Int. Cl.: C08L 101/16, C08K 5/00

(54) **BIODEGRADABLE FLAME RETARDANT COMPOSITE COMPOSITION AND PROCESS FOR PRODUCING THE SAME**
BIOLOGISCH ABBAUBARE FLAMMWIDRIGE VERBUNDZUSAMMENSETZUNG UND HERSTELLUNGSVERFAHREN DAFÜR
COMPOSITION IGNIFUGEANTE BIODEGRADABLE ET SON PROCEDE DE PRODUCTION

(30) Priority: 24.04.2002 JP 2002121890
(43) Date of publication of application: 19.01.2005
(73) Proprietor: SONY CORPORATION, Tokyo 141-0001 (JP)
(72) Inventor: YAMADA, Shinichiro, c/o SONY CORPORATION, Tokyo 141-0001 (JP); FUJIHIRA, Yuko, c/o SONY CORPORATION, Tokyo 141-0001 (JP); MORI, Hiroyuki, c/o SONY CORPORATION, Tokyo 141-0001 (JP); NOGUCHI, Tsutomu, c/o SONY CORPORATION, Tokyo 141-0001 (JP)
(74) Representative: Nicholls, Michael John
(86) International application number: PCT/JP2003/004694
(87) International publication number: WO 2003/091344

(56) References cited:
- EP-A- 0 890 604
- JP-A- 59 006 251
- JP-A- 2001 353 827
- JP-A- 2002 284 974
- JP-A- 2003 165 917
- JP-A- 2003 192 929
- US-A- 5 258 422

## Description

### Technical Field

The present invention relates to a composition which is not only flame-retardant but also biodegradable when it is disposed into the natural environment, thereby enabling reduction of the adverse effect on the environment.

### Background Art

Recently, a variety of synthetic resin materials have been developed and provided, and the amount of the synthetic resinmaterials used in various fields in industry is increased year by year, and about 10,000,000 tons of various types of synthetic resins are produced annually. As a result, the amount of synthetic resin waste is increased, and the method for the waste disposal poses serious social problems. Thermal disposal of the resins disposed of as such may generate toxic gas or cause a damage in the incinerator due to large heat of combustion, leading to a big load on the environment.

Examples of conventionally known methods of disposing of resin waste include incineration or landfill of the waste resin which has been lowered in molecular weight by, e.g., heat decomposition or chemical decomposition. However, the thermal disposal discharges carbon dioxide, which may cause global warming. Further, the thermal disposal of resins containing sulfur, nitrogen, or a halogen discharges harmful gas to cause air pollution. On the other hand, in the landfill of resins, almost all the resins currently used are not decomposed for a long term and remain intact, causing soil pollution. For solving these problems, in recent years, biodegradable resins are being developed and put into practical use. The biodegradable resins biochemically decompose into carbon dioxide, water, and the like due to microorganisms or the like, and hence, after the biodegradable resins are disposed of in the natural environment, they easily decompose into low-molecular weight compounds harmless to the environment. Therefore, the use of the biodegradable resins can reduce the adverse effect of waste disposal on the environment. For this reason, the biodegradable resins have attracted attention, and have been brought into practical use in disposable products, mainly miscellaneous goods for daily use, sanitary goods, playthings, and the like.

As mentioned above, conventional biodegradable resins secure safety of the natural environment; however, the conventional biodegradable resins have only unsatisfactory flame retardancy which is increasingly demanded as one of the safety properties required for actual use of the resins. Especially in electrical appliances, it is desired that a housing or the like is formed from a biodegradable resin to facilitate the treatment of waste recovered, but the resins used in the housing for electrical appliance must meet the flame retardancy requirements prescribed in Japanese Industrial Standards (JIS) or UL (Under-writer Laboratory) standards, and the conventional biodegradable resins cannot meet the flame retardancy standard requirements.

Further, when the biodegradable resin is used in utility articles, such as housings for, e.g., electrical appliance and electronic apparatus, the resin is required to have not only the flame retardancy but also keeping properties (durability under conditions at constant temperature and humidity). For example, in small-size audio products, the resin needs to keep physical properties, such as strength, for 3 to 7 years under conditions at a relative humidity of 80% at 30°C.

Conventionally, for imparting physical properties suitable for practical shaped articles to the biodegradable resins, various studies have been made. For example, in aliphatic polyester resins which are representative examples of biodegradable polymers, with respect to the improvement of the crystallization rate by addition of inorganic filler or a nucleating agent, the blend with a biodegradable resin having elastic properties, e.g., low glass transition temperature, and the shaped article using the plastic, some patent applications have been filed (e.g., Japanese Patent Application Publications H03-290461, H04-146952, and H04-325526). However, these shaped articles are only used particularly as films and packaging materials, and hence do not have satisfactory physical properties in respect of the flame retardancy or mechanical strength.

In view of the above, an object of the present invention is to provide a composition that is biodegradable and flame-retardant and has mechanical strength, and produces less adverse impact on the natural environment when disposed.

EP-A-890604 describes a biodegradable plastic composition obtained by adding a carbodiimide compound to a biodegradable plastic.

US-A-5258422 describes compostable and biodegradable thermoplastic compositions comprising a thermoplastic polymer, a hydrolytically unstable antioxidant, a pro-oxidant, an accelerator and a property modifier.

### DISCLOSURE OF THE INVENTION

Inventors of the present invention have found that the above object is attained by adding to a biodegradable resin a flame retardant additive and a hydrolysis inhibitor for the biodegradable resin. Examples of flame retardant additives include halogen flame retardants, but, when the halogen flame retardant is added to a resin, thermal disposal of the resin containing the halogen flame retardant generates halogen gas, and complicated treatments are needed to make the halogen gas harmless to human body, and therefore the halogen flame retardants are not preferred examples.

Therefore, as flame retardant additives considering the environment, the present inventors have paid attention to (i) hydroxide compounds, (ii) ammonium phosphate compounds, and (iii) silica compounds. The hydroxide compounds (i) absorb heat generated upon burning of a resin and decompose simultaneously with generating water, so that the endothermic action and generation of water exhibit flame retardancy. The ammonium phosphate compounds (ii) decompose upon burning to form polymetaphosphoric acid, and a carbon film formed by the dehydration action shields oxygen to exhibit a flame retardancy effect. The silica compounds (iii) have an inorganic filler effect on a resin, thus imparting flame retardancy to the resin. By incorporating the flame retardant additives (i) to (iii) into a biodegradable resin, the resultant resin has flame retardancy.

Further, the inventors of the present invention have made studies with a view toward improving the mechanical strength of the composite resin containing the biodegradable resin and the flame retardant additives (i) to (iii). As a result, they have found that, by further adding a hydrolysis inhibitor for the biodegradable resin to the composite resin, the hydrolysis rate of the biodegradable resin contained in the composite resin is retarded, so that the mechanical strength of the composite resin is maintained for a longer term.

Thus, the present inventors have completed a novel, ideal resin having biodegradability and flame retardancy as well as mechanical strength using a ternary system comprising a biodegradable resin, a flame retardant additive, and a hydrolysis inhibitor.

Specifically, the present invention is directed to:
(1) a composition characterized by including one or a plurality of species of organic polymer compound having biodegradability, a flame retardant additive which is a hydroxide compound, a phosphorous compound or a silica compound, and a hydrolysis inhibitor for the organic polymer compound having biodegradability;
(2) the composition according to item (1) above, characterized in that the organic polymer compound having biodegradability is a polysaccharide, an aliphatic polyester, a polyamino acid, polyvinyl alcohol, a polyalkylene glycol, or a copolymer comprising at least one of the compounds; and
(3) the composition according to item (1) above, characterized in that the aliphatic polyester is polylactic acid, polycaprolactone, polyhydroxybutyric acid, polyhydroxyvaleric acid, polyethylene succinate, polybutylene succinate, polybutylene adipate, polymalic acid, a microbiologically synthesized polyester, or a copolymer comprising at least one of the compounds.

Further, the present invention is directed to:
(4) the composition according to item (1) above, characterized in that the flame retardant additive is a hydroxide compound having a purity of 99.5% or more;
(5) the composition according to item (1) above, characterized in that the flame retardant additive is a particulate hydroxide compound having a BET specific surface area of 5.0 m²/g or less;
(6) the composition according to item (1) above, characterized in that the flame retardant additive is a particulate hydroxide compound having an average particle size of 100 µm or less;
(7) the composition according to item (1) above, characterized in that the flame retardant additive is a silica compound having a silicon dioxide content of 50% or more; and
(8) the composition according to item (1) above, characterized in that the flame retardant additive is a particulate silica compound having an average particle size of 50 µm or less.

Further, the present invention is directed to:
(9) the composition according to item (1) above, characterized in that the hydrolysis inhibitor is at least one species of compound selected from a carbodiimide compound, an isocyanate compound, and an oxazoline compound;
(10) a method for producing the composition according to item (1) above, characterized by mixing together one or a plurality of species of organic polymer compound having biodegradability, a flame retardant additive, and a hydrolysis inhibitor for the organic polymer compound having biodegradability;
(11) a shaped article comprising the composition according to item (1) above;
(12) the shaped article according to item (11) above, characterized in that it is a housing for electrical appliance; and
(13) an electrical appliance comprising a part including the composition according to item (1) above as a constituent.

### BEST MODE FOR CARRYING OUT THE INVENTION

Hereinbelow, with respect to the composition of the present invention, the constituents and the method for producing the same will be described.

With respect to the organic polymer compound having biodegradability used in the present invention (hereinafter, referred to as "biodegradable polymer compound"), there is no particular limitation as long as the compound, after being used, decomposes into low-molecular weight compounds, eventually water and carbon dioxide due to microorganisms in the natural world (Biodegradable Plastics Society, ISO/TC-207/SC3). As the biodegradable polymer compound, a biodegradable resin is preferred. Specific examples of biodegradable resins include polysaccharides, peptides, aliphatic polyesters, polyamino acids, polyvinyl alcohol, polyamides, polyalkylene glycols, and copolymers comprising at least one of the above compounds, each having biodegradability.

Of these, as the biodegradable polymer compound used in the present invention, preferred are aliphatic polyesters excellent in mixing properties and mass-production properties. Among the aliphatic polyesters, more preferred are polylactic acids, such as poly-L-lactic acid (PLLA), and a random copolymer of L-lactic acid and D-lactic acid, and derivatives thereof. Other polyesters, e.g., polycaprolactone, polyhydroxybutyric acid, polyhydroxyvaleric acid, polyethylene succinate, polybutylene succinate, polybutylene adipate, polymalic acid, polyglycolic acid, polysuccinate, polyoxalate, polybutylene diglycolate, polydioxanone, and microbiologically synthesized polyesters can be used. Examples of the microbiologically synthesized polyesters include 3-hydroxybutyrate (3HB), 3-hydroxyvalerate (3HV), and copolymers thereof.

Examples of the polysaccharides include cellulose, starch, chitosan, dextran, and derivatives thereof and copolymers comprising one of them. Examples of the peptides include collagen, casein, fibrin, and gelatin. Examples of the polyamides include nylon 4, and a nylon 2/nylon 6 copolymer.

Further, an organic polymer compound, which is biodegradable when having a low molecular weight, and which is poor in biodegradability when having a high molecular weight, can be used in the present invention as long as the organic polymer compound is, for example, graft-polymerized with the above-mentioned biodegradable polymer compound to exhibit biodegradability. Specific examples of such organic polymer compounds having poor biodegradability when having a high molecular weight include polyethylene, polyacrylic acid derivatives, polypropylene, and polyurethane. With respect to the molecular weight and terminal group of these resins, there is no particular limitation as long as a satisfactory mechanical strength can be obtained.

The biodegradable polymer compound used in the present invention can be prepared by a known method. For example, the biodegradable polyester can be prepared by a method, such as (i) a lactide method, (ii) polycondensation of a polyhydric alcohol and a polybasic acid, or (iii) intermolecular polycondensation of a hydroxycarboxylic acid having a hydroxyl group and a carboxyl group in its molecule.

With respect to the compound usable in the flame retardant additive in the present invention, the flame retardant additives shown below may be used individually or in combination.

Examples of phosphorus flame retardant compounds include compounds containing phosphorus, such as ammonium phosphate, ammonium polyphosphate, melamine phosphate, red phosphorus, phosphoric esters, tris(chloroethyl) phosphate, tris(monochloropropyl) phosphate, tris(dichloropropyl) phosphate, triallyl phosphate, tris(3-hydroxypropyl) phosphate, tris(tribromophenyl) phosphate, tris-β-chloropropyl phosphate, tris(dibromophenyl) phosphate, tris(tribromoneopentyl) phosphate, tetrakis(2-chloroethyl) ethylenediphosphate, dimethyl methylphosphate, tris(2-chloroethyl) orthophosphate, aromatic condensed phosphates, halogen-containing condensed organophosphates, ethylenebis[tris(2-cyanoethyl)]phosphonium bromide, ammonium polyphosphate, β-chloroethyl acid phosphate, butyl pyrophosphate, butyl acid phosphate, butoxyethyl acid phosphate, 2-ethylhexyl acid phosphate, melamine phosphate, halogen-containing phosphates, and phenylphosphonic acid.

Examples of inorganic flame retardant compounds include metal hydroxides, such as aluminum hydroxide and magnesium hydroxide; and modified compounds thereof.

Examples of organic flame retardant compounds include silica compounds, such as silicon dioxide, low-melting point glass, and organosiloxane.

Examples of the colloidal flame retardant compounds include colloids of conventionally used hydroxides having flame retardancy, such as aluminum hydroxide, magnesium hydroxide, and calcium hydroxide.

Flame retardant additives used in the present invention are ones that do not cause a load on the environment after the disposal, for example, generate no toxic gas during the thermal disposal. From the viewpoint of the environmental consideration, as the flame retardant additive in the present invention, it is desired that (i) a hydroxide compound, such as aluminum hydroxide, magnesium hydroxide, or calcium hydroxide; (ii) the above-mentioned phosphorus compound, especially an ammonium phosphate compound, such as ammonium phosphate or ammonium polyphosphate; or (iii) a silica compound, such as silicon dioxide, low-melting point glass, or organosiloxane is used.

In the silica compounds preferred as the flame retardant additive used in the present invention, more preferred are silica compounds having a silicon dioxide content of about 50% or more. The reason for this is that the silica compound taken out from natural minerals inevitably contains a certain amount of substances other than the silica compound (e.g., MgO, CaO, Fe₂O₃, and Al₂O₃). It is preferred that the flame retardant effect of the inorganic filler is not lowered by the impurities.

In the hydroxide compounds preferred as the flame retardant additive used in the present invention, more preferred are ones having a purity of about 99.5% or more. The reason for this is that the shelf stability is improved when using the hydroxide compound having a higher purity and the hydrolysis inhibitor in combination. The hydroxide compound purity can be measured by a known method. For example, the amount of impurities contained in the hydroxide compound is measured by a known method, and the amount of impurities is subtracted from the amount of the hydroxide compound to determine a purity of the hydroxide compound. More specifically, as examples of impurities contained in, for example, aluminum hydroxide, there can be mentioned Fe₂O₃, SiO₂, T-Na₂O, and S-Na₂O. The Fe₂O₃ amount is determined by melting aluminum hydroxide in a boric acid solution of sodium carbonate and subjecting it to O-phenanthroline absorption spectrophotometry (JIS H 1901). The SiO₂ amount is determined bis(tribromophenyl)fumaramide, N-methylhexabromodiphenylamine, bromostyrene, and diallyl chlorendate.

Examples of organic flame retardant compounds include chlorendic anhydride; phthalic anhydride; compounds containing bisphenol A; glycidyl compounds, such as glycidyl ether; polyhydric alcohols, such as diethylene glycol and pentaerythritol; modifiedcarbamide; silicone oil; and silica compounds, such as silicon dioxide, low-melting point glass, and organosiloxane.

Examples of the colloidal flame retardant compounds include colloids of conventionally used hydroxides having flame retardancy, such as aluminum hydroxide, magnesium hydroxide, and calcium hydroxide; hydrates, such as calcium aluminate, gypsum dihydrate, zinc borate, barium metaborate, borax, and kaolin clay; nitrate compounds, such as sodium nitrate; and flame retardant compounds, such as molybdenum compounds, zirconium compounds, antimony compounds, dawsonite, and plogopite.

With respect to the flame retardant additive in the present invention, especially preferred are ones that do not cause a load on the environment after the disposal, for example, generate no toxic gas during the thermal disposal. From the viewpoint of the environmental consideration, as the flame retardant additive in the present invention, it is desired that (i) a hydroxide compound, such as aluminum hydroxide, magnesium hydroxide, or calcium hydroxide; (ii) the above-mentioned phosphorus compound, especially an ammonium phosphate compound, such as ammonium phosphate or ammonium polyphosphate; or (iii) a silica compound, such as silicon dioxide, low-melting point glass, or organosiloxane is used.

In the silica compounds preferred as the flame retardant additive used in the present invention, more preferred are silica compounds having a silicon dioxide content of about 50% or more. The reason for this is that the silica compound taken out from natural minerals inevitably contains a certain amount of substances other than the silica compound (e.g., MgO, CaO, Fe₂O₃, and Al₂O₃). It is preferred that the flame retardant effect of the inorganic filler is not lowered by the impurities.

In the hydroxide compounds preferred as the flame retardant additive used in the present invention, more preferred are ones having a purity of about 99.5% or more. The reason for this is that the shelf stability is improved when using the hydroxide compound having a higher purity and the hydrolysis inhibitor in combination. The hydroxide compound purity can be measured by a known method. For example, the amount of impurities contained in the hydroxide compound is measured by a known method, and the amount of impurities is subtracted from the amount of the hydroxide compound to determine a purity of the hydroxide compound. More specifically, as examples of impurities contained in, for example, aluminum hydroxide, there can be mentioned Fe₂O₃, SiO₂, T-Na₂O, and S-Na₂O. The Fe₂O₃ amount is determined by melting aluminum hydroxide in a boric acid solution of sodium carbonate and subjecting it to O-phenanthroline absorption spectrophotometry (JISH1901). The SiO₂ amount is determined by melting aluminum hydroxide in a boric acid solution of sodium carbonate and subjecting it to molybdenum blue absorption spectrophotometry (JIS H 1901). The T-Na₂O amount is determined by melting aluminum hydroxide in sulfuric acid and subjecting it to flame spectrometry, and the S-Na₂O amount is determined by extracting aluminum hydroxide with warm water and subjecting the extract to flame spectrometry. The above-determined amount value is subtracted from the weight of the aluminum hydroxide to obtain a purity of the aluminum hydroxide. A plurality of different flame retardant hydroxide compounds each having a purity of 99.5% or more can be used in combination.

With respect to the form of the flame retardant additive used in the present invention, there is no particular limitation, but it is preferred that the flame retardant additive is particulate. The particle size of the flame retardant additive can be appropriately selected depending on the type of the flame retardant additive used. For example, when the flame retardant additive is a silica compound, such as SiO₂ or glass, it is preferred that it has an average particle size of about 50 µm or less, as measured by a laser diffraction method. In this case, the particle size distribution is not limited. On the other hand, when the flame retardant additive is a hydroxide compound, such as Al(OH)₃, Mg(OH)₂, or Ca (OH)₂, it is preferred that it has an average particle size of about 100 µm or less, as measured by a laser diffraction method. In this case, the particle size distribution is not limited. From the viewpoint of achieving excellent injection moldability in the molding process and excellent dispersion properties in the kneading, the average particle size of the flame retardant additive is preferably in the above range, more preferably smaller in the range. For increasing the filling density of the flame retardant additive in the composition, a plurality of flame retardant additives having different average particle sizes can be used in combination.

Further, when the flame retardant additive is a hydroxide compound, such as Al (OH)₃, Mg (OH)₂, or Ca (OH)₂, it is preferred to use particles having a BET specific surface area of about 5.0 m²/g or less, as measured by a nitrogen gas absorption method. For increasing the filling density of the flame retardant additive in the composition, a plurality of flame retardant hydroxide compounds having different BET specific surface areas can be used in combination. From the viewpoint of achieving excellent moldability, the BET specific surface area of the flame retardant additive is preferably in the above range, more preferably smaller in the range.

The amount of the flame retardant additive added in the present invention can be arbitrarily determined as long as satisfactory mechanical strength of the composition of the present invention can be secured. With respect to the specific amount of the flame retardant additive added, when the flame retardant additive is a hydroxide compound, such as Al(OH)₃, Mg (OH)₂, or Ca (OH)₂, the amount may be about 5 to 50% by weight, preferably about 7.5 to 45% by weight, further preferably about 10 to 40% by weight. When the flame retardant additive is an ammonium (poly)phosphate compound, such as (NH₄)₃ (PₙO₃ₙ₊₁)⁽ⁿ⁺²⁾ (wherein n is a natural number), the amount may be about 1 to 25% by weight, preferably about 2 to 20% by weight, further preferably about 3 to 15% by weight. When the flame retardant additive is a silica compound, such as SiO₂ or glass, the amount may be about 5 to 40% by weight, preferably about 10 to 35% by weight, further preferably about 15 to 30% by weight.

With respect to the hydrolysis inhibitor used in the present invention, there is no particular limitation as long as it is an additive which inhibits the biodegradable polymer compound from hydrolyzing. Examples of the hydrolysis inhibitors include compounds having reactivity with active hydrogen in the biodegradable polymer compound. By adding such a compound, the amount of active hydrogen in the biodegradable polymer compound is reduced, making it possible to suppress hydrolysis of the biodegradable polymer chain due to the catalytic action of active hydrogen. Here, the active hydrogen means hydrogen bonded to oxygen or nitrogen (hydrogen in an N-H bond or O-H bond), and hydrogen of this type has high reactivity, as compared to hydrogen bonded to carbon (hydrogen in a C-H bond). More specifically, examples include hydrogen in a carboxyl group: -COOH; a hydroxyl group: -OH; an amino group: -NH₂; or an amide linkage: -NHCO- in the biodegradable polymer compound.

As the compound having reactivity with active hydrogen in the biodegradable polymer compound, a carbodiimide compound, an isocyanate compound, and an oxazoline compound can be used. Especially preferred is a carbodiimide compound which can be melt-kneaded together with the biodegradable polymer compound, and can more remarkably suppress the hydrolysis even when used in a small amount.

The carbodiimide compound is a compound having in its molecule one or more carbodiimide groups, and includes polycarbodiimide compounds. As a method for preparing the carbodiimide compound, there can be mentioned a method in which, using as a catalyst, an organophosphorus compound, such as O,O-dimethyl-O-(3-methyl-4-nitrophenyl) phosphorothioate, O,O-dimethyl-O-[3-methyl-4-(methylthio)phenyl] phosphorothioate, or O,O-diethyl-O-2-isopropyl-6-methylpyridine-4-yl phosphorothioate, or an organometal compound, such as a rhodium complex, a titanium complex, a tungsten complex, or a palladium complex, a certain polymer isocyanate is subjected to decarboxylative polycondensation at about 70°C or higher in the absence of a solvent or in an inert solvent (e.g., hexane, benzene, dioxane, or chloroform) to prepare a carbodiimide compound.

Examples of monocarbodiimide compounds included in the carbodiimide compounds include dicyclohexylcarbodiimide, diisopropylcarbodiimide, dimethylcarbodiimide, diisobutylcarbodiimide, dioctylcarbodiimide, diphenylcarbodiimide, and naphthylcarbodiimide, and, of these, preferred are dicyclohexylcarbodiimide and diisopropylcarbodiimide, which are especially easily available commercially.

Examples of isocyanate compounds, which are compounds having reactivity with active hydrogen in the biodegradable polymer compound, include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, isophorone diisocyanate, 4,4'-dicyclohexylmethane diisocyanate, and 3,3'-dimethyl-4,4'-dicyclohexylmethane diisocyanate.

The isocyanate compound can be easily prepared by a known method, and a commercially available isocyanate compound can be appropriately selected. As a commercially available polyisocyanate compound, an aromatic isocyanate aduct, such as Coronate (manufactured and sold by NIPPON POLYURETHANE INDUSTRY CO., LTD.; hydrogenated diphenylmethane diisocyanate) or Millionate (manufactured and sold by NIPPON POLYURETHANE INDUSTRY CO., LTD.), can be used. Of these, it is preferred to use, for example, a polyisocyanate compound having an isocyanate group blocked with a masking agent (e. g. , a polyhydric aliphatic alcohol or aromatic polyol), which is in a state of solid rather than liquid, when the composition of the present invention is produced by melt-kneading.

Examples of oxazoline compounds, which are compounds having reactivity with active hydrogen in the biodegradable polymer compound, include 2, 2'-o-phenylenebis(2-oxazoline), 2,2'-m-phenylenebis(2-oxazoline), 2,2'-p-phenylenebis(2-oxazoline), 2,2'-p-phenylenebis(4-methyl-2-oxazoline), 2,2'-m-phenylenebis(4-methyl-2-oxazoline), 2,2'-p-phenylenebis(4,4'-dimethyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-ethylenebis(4-methyl-2-oxazoline), and 2,2'-diphenylenebis(2-oxazoline).

The biodegradation rate and the mechanical strength of the composition of the present invention can be controlled by changing the type and amount of the hydrolysis inhibitor used in the present invention, and therefore the type and amount of the hydrolysis inhibitor incorporated may be determined depending on the desired product. Specifically, it is preferred that the amount of the hydrolysis inhibitor added is about 5% by weight or less. As the hydrolysis inhibitor, the above compounds may be used individually or in combination.

With respect to the method for producing the composition of the present invention, there is no particular limitation, and a known method may be used. As a preferred example of the method for producing the composition, there can be mentioned a method in which the above-mentioned flame retardant additive and hydrolysis inhibitor are melt-kneaded with the organic polymer compound having biodegradability to prepare a composition. In the method by melt-kneading, the flame retardant additive and the hydrolysis inhibitor are added and mixed with each other before or while melting the organic polymer compound having biodegradability. In this case, the flame retardant additive and the hydrolysis inhibitor may be added either at the same time or successively. When they are successively added, any of themmay be first added. In addition, there can be mentioned a method in which the organic polymer compound having biodegradability is melted and then, any one of the flame retardant additive and the hydrolysis inhibitor is added and mixed, and the resultant composition is melted again and the remaining hydrolysis inhibitor or flame retardant additive is added thereto and mixed with one another.

The composition of the present invention may contain another known additive in an amount such that the desired effects of the composition of the present invention are not sacrificed. Examples of the known additives include reinforcement, inorganic or organic filler, an antioxidant, a heat stabilizer, an ultraviolet light absorber, a lubricant, a wax, a coloring agent, a crystallization promoter, and an organic substance having degradability, such as starch. These may be used individually or in combination.

Examples of the reinforcement include glass microbead, carbon fiber, chalk, quartz, such as novoculite, silicates, such as asbestos, feldspar, mica, talc, and wollastonite, and kaolin. Examples of inorganic filler include carbon, silicon dioxide, metal oxide fine particles, such as alumina, silica, magnesia, and ferrite, silicates, such as talc, mica, kaolin, and zeolite, and fine particles of barium sulfate, calcium carbonate, or fllerene, and examples of organic filler include epoxy resins, melamine resins, urea resins, acrylic resins, phenolic resins, polyimide resins, polyamide resins, polyester resins, and Teflon (registered trademark) resins. Of these, preferred are carbon and silicon dioxide. The above filler may be used individually or in combination.

Examples of the antioxidants include phenolic, amine, phosphorus, sulfur, hydroquinone, and quinoline antioxidants. Examples of phenolic antioxidants include hindered phenols, for example, C₂₋₁₀ alkylenediol-bis [3-(3, 5-di-branched C₃₋₆ alkyl-4-hydroxyphenyl) propionate], such as 2,6-di-t-butyl-p-cresol, 1,3,5-trimethyl-2,4,6-tris(3,5-di-t-butyl-4-hydroxybenzyl )benzene, 2,2'-methylenebis(4-methyl-6-t-butylphenol), 4,4'-methylenebis(2,6-di-t-butylphenol), 4,4'-butylidenebis(3-methyl-6-t-butylphenol), and 1,6-hexanediol bis[3-(3,5-di-t-butyl-4-hydroxyphenyl)propionate]; di- or trioxy C₂₋₄ alkylenediol bis [3-(3,5-di-branched C₃₋₆ alkyl-4-hydroxyphenyl)propionate], such as triethylene glycol bis[3-(3-t-butyl-5-methyl-4-hydroxyphenyl)propionate]; C₃₋₈ alkanetriol bis [3- (3, 5-di-branched C₃₋₆ alkyl-4-hydroxyphenyl)propionate], such as glycerol tris[3-(3,5-di-t-butyl-4-hydroxyphenyl)propionate]; C₄₋₈ alkanetetraol tetrakis[3-(3,5-di-branched C₃₋₆ alkyl-4-hydroxyphenyl)propionate], such as pentaerythritol tetrakis[3-(3,5-di-t-butyl-4-hydroxyphenyl)propionate]; and n-octadecyl 3-(4',5'-di-t-butylphenol)propionate, n-octadecyl 3-(4'-hydroxy-3',5'-di-t-butylphenol)propionate, stearyl 2-(3,5-di-t-butyl-4-hydroxyphenol)propionate, distearyl 3,5-di-t-butyl-4-hydroxybenzylphosphonate, 2-t-butyl-6-(3-t-butyl-5-methyl-2-hydroxybenzyl)-4-methyl phenyl acrylate, N,N'-hexamethylenebis(3,5-di-t-butyl-4-hydroxy-hydrocinna mamide), 3,9-bis{2-[3-(3-t-butyl-4-hydroxy-5-methylphenyl)propiony loxy]-1,1-dimethylethyl}-2,4,8,10-tetraoxaspiro[5,5]undec ane, 4,4'-thiobis(3-methyl-6-t-butylphenol), and 1,1,3-tris(2-methyl-4-hydroxy-5-t-butylphenol)butane.

Examples of amine antioxidants include phenyl-1-naphthylamine, phenyl-2-naphthylamine, N,N'-diphenyl-1,4-phenylenediamine, and N-phenyl-N'-cyclohexyl-1,4-phenylenediamine.

Examples of phosphorus antioxidants include phosphite compounds, such as triisodecyl phosphite, triphenyl phosphite, trisnonylphenyl phosphite, diphenylisodecyl phosphite, phenyldiisodecyl phosphite, 2,2-methylenebis(4,6-di-t-butylphenyl)octyl phosphite, 4,4'-butylidenebis(3-methyl-6-t-butylphenyl)ditridecyl phosphite, tris(2,4-di-t-butylphenyl) phosphite, tris(2-t-butyl-4-methylphenyl) phosphite, tris(2,4-di-t-amylphenyl) phosphite, tris(2-t-butylphenyl) phosphite, bis(2-t-butylphenyl)phenyl phosphite, tris[2-(1,1-dimethylpropyl)-phenyl] phosphite, tris[2,4-(1,1-dimethylpropyl)-phenyl] phosphite, tris(2-cyclohexylphenyl) phosphite, and tris(2-t-butyl-4-phenylphenyl) phosphite; and phosphine compounds, such as triethylphosphine, tripropylphosphine, tributylphosphine, tricyclohexylphosphine, diphenylvinylphosphine, allyldiphenylphosphine, triphenylphosphine, methylphenyl-p-anisylphosphine, p-anisyldiphenylphosphine, p-tolyldiphenylphosphine, di-p-anisylphenylphosphine, di-p-tolylphenylphosphine, tri-m-aminophenylphosphine, tri-2,4-dimethylphenylphosphine, tri-2,4,6-trimethylphenylphosphine, tri-o-tolylphosphine, tri-m-tolylphosphine, tri-p-tolylphosphine, tri-o-anisylphosphine, tri-p-anisylphosphine, and 1,4-bis(diphenylphosphino)butane.

Examples of hydroquinone antioxidants include 2,5-di-t-butylhydroquinone; examples of quinoline antioxidants include 6-ethoxy-2,2,4-trimethyl-1,2-dihydroquinoline; and examples of sulfur antioxidants include dilauryl thiodipropionate and distearyl thiodipropionate. Of these, preferred examples of antioxidants include phenolic antioxidants (especially hindered phenols), such as polyol poly [(branched C₃₋₆ alkyl group and hydroxyl group-substituted phenyl)propionate]. The antioxidants may be used individually or in combination.

Examples of the heat stabilizers include nitrogen-containing compounds, e.g., basic nitrogen-containing compounds, such as polyamide, a poly-β-alanine copolymer, polyacrylamide, polyurethane, melamine, cyanoguanidine, and melamine-formaldehyde condensation products; and alkali metal- or alkaline earth metal-containing compounds, such as organic carboxylic acid metal salts (e.g., calcium stearate and calcium 12-hydroxystearate), metal oxides (e.g., magnesium oxide, calcium oxide, and aluminum oxide), metal hydroxides (e.g., magnesium hydroxide, calcium hydroxide, and aluminum hydroxide), and metal carbonates; zeolite; and hydrotalcite. Especially preferred are alkali metal- or alkaline earth metal-containing compounds (especially, alkaline earth metal-containing compounds, such as magnesium compounds and calcium compounds), zeolite, and hydrotalcite. The heat stabilizers may be used individually or in combination.

Examples of the ultraviolet light absorbers include conventionally known benzophenone, benzotriazole, cyanoacrylate, salicylate, and oxalic anilide ultraviolet light absorbers. Examples include a [2-hydroxy-4-(methacryloyloxyethoxy)benzophenone]-methyl methacrylate copolymer, a [2-hydroxy-4-(methacryloyloxymethoxy)benzophenone]-methyl methacrylate copolymer, a [2-hydroxy-4-(methacryloyloxyoctoxy)benzophenone]-methyl methacrylate copolymer, a [2-hydroxy-4-(methacryloyloxydodecyloxy)benzophenone]-met hyl methacrylate copolymer, a [2-hydroxy-4-(methacryloyloxybenzyloxy)benzophenone]-meth yl methacrylate copolymer, a [2,2'-dihydroxy-4-(methacryloyloxyethoxy)benzophenone]-me thyl methacrylate copolymer, a [2,2'-dihydroxy-4-(methacryloyloxymethoxy)benzophenone]-m ethyl methacrylate copolymer, and a [2,2'-dihydroxy-4-(methacryloyloxyoctoxybenzophenone)]-me thylmethacrylate copolymer. The ultraviolet light absorbers may be used individually or in combination.

Examples of the lubricants include petroleum lubricating oil, such as liquid paraffin; synthetic lubricating oil, such as halogenated hydrocarbon, diester oil, silicone oil, and fluorine silicone; various modified silicone oil (epoxy-modified, amino-modified, alkyl-modified, or polyether-modified); silicone lubricating substances, such as copolymers of an organic compound, such as polyoxy alkylene glycol, and silicone; silicone copolymers; various fluorine surfactants, such as fluoroalkyl compounds; fluorine lubricating substances, such as trifluoromethylene chloride low polymers; waxes, such as paraffin wax and polyethylene wax; higher aliphatic alcohols; higher aliphatic amides; higher fatty esters; higher fatty acid salts; and molybdenum disulfide. Of these, a silicone copolymer (which is obtained by block- or graft-polymerizing a resin with silicone) is especially preferably used. The silicone copolymer may be one which is obtained by block- or graft-polymerizing an acrylic resin, a polystyrene resin, a polynitrile resin, a polyamide resin, a polyolefin resin, an epoxy resin, a polybutyral resin, a melamine resin, a vinyl chloride resin, a polyurethane resin, or a polyvinyl ether resin with silicone, and it is preferred to use a silicone graft copolymer. These lubricants may be used individually or in combination.

Examples of the waxes include olefin waxes, such as a polypropylene wax and a polyethylene wax, paraffin waxes, Fischer-Tropsch wax, microcrystalline wax, montan wax, fatty amide waxes, higher aliphatic alcohol waxes, higher fatty acid waxes, fatty ester waxes, carnauba wax, and rice wax. These waxes may be used individually or in combination.

Examples of the coloring agents include inorganic pigments, organic pigments, and dyes. Examples of inorganic pigments include chromium pigments, cadmium pigments, iron pigments, cobalt pigments, ultramarine blue, and Prussian blue. Specific examples of organic pigments and dyes include carbon black; phthalocyanine pigments, such as copper phthalocyanine; quinacridone pigments, such as quinacridone magenta and quinacridone red; azo pigments, such as Hansa yellow, disazo yellow, permanent yellow, permanent red, and naphthol red; nigrosine dyes, such as spirit black SB, nigrosine base, and oil black BW; oil blue; and alkali blue. The coloring agents may be used individually or in combination.

Examples of the crystallization promoters include organic acid salts, such as sodium p-t-butylbenzoate, sodium montanate, calcium montanate, sodium palmitate, and calcium stearate; inorganic salts, such as calcium carbonate, calcium silicate, magnesium silicate, calcium sulfate, barium sulfate, and talc; and metal oxides, such as zinc oxide, magnesium oxide, and titanium oxide. These crystallization promoters may be used individually or in combination.

The composition of the present invention may be subj ected to known treatment. For example, for inhibiting the biodegradable polymer compound in the composition of the present invention from hydrolyzing, the composition of the present invention may be irradiated with an active energy ray.

Examples of active energy ray sources include electromagnetic waves, electron beams, particle beams, and combinations thereof. Examples of electromagnetic waves include ultraviolet rays (UV) and X-rays, and examples of particle beams include beams of elementary particles, such as protons or neutrons. Of these, especially preferred is electron beam irradiation using an electron accelerator.

Irradiation of the above active energy rays can be made using a known apparatus. Examples include a UV radiation apparatus and an electron accelerator. With respect to the irradiation dose and the intensity of irradiation, there is no particular limitation as long as the biodegradable polymer compound in the composition of the present invention is effectively inhibited from hydrolyzing. For example, in the electron beam irradiation, the acceleration voltage is preferably about 100 to 5,000 kV, and the irradiation dose is preferably about 1 kGy or more.

The composition of the present invention can be applied to a variety of uses. For example, using the composition of the present invention, a shaped article, e.g., a housing for electrical appliance, such as radio set, microphone, TV set, keyboard, portable music reproducing machine, and personal computer, can be obtained. Further, the shaped article can be used not only in a housing for electrical appliance but also in other applications, such as packaging materials.

Examples of the shaping methods for the shaped article include film blowing, extrusion, and injection molding, and, of these, especially preferred is injection molding. More specifically, the extrusion can be conducted by a general method using a known extruder, such as a single screw extruder, a multi-screw extruder, or a tandem extruder. The injection molding can be conducted by a general method using a known injection molding machine, such as an in-line screw injection molding machine, a multi-layer injection molding machine, or a twin-cylinder injection molding machine.

Hereinbelow, Examples of the present invention will be described in detail while comparing with Comparative Examples, but the following Examples should not be construed as limiting the scope of the present invention.

### Examples 1 to 8 and Comparative Example 1

### (Preparation of specimens)

As the biodegradable resin (A), polylactic acid, Lacea (H100J; manufactured and sold by Mitsui Chemicals, Inc.) was used, and, as the flame retardant additives (B) and hydrolysis inhibitor (C), the corresponding reagents were used. The components A, B, and C were mixed together using a melt-kneading method. The kneading was conducted under conditions such that Minimax-mixtruder (manufactured and sold by Toyo Seiki Seisaku-Sho, Ltd.) was used as a kneader, the nozzle temperature was 170 to 175°C, the torque was 4 to 6 kg, and the residence time was 3 seconds or less. The resultant resin composite was ground and then pressed under 300 kg/cm² at 170°C, and shaped into a plate having a thickness of 1.0 mm, followed by cutting out into 12.7 mm × 127 mm, thus obtaining a test specimen.

The formulations (compound; parts by weight) of the specimens prepared for the Examples and Comparative Example are shown below.

**Table 1**

| | Biodegradable resin | Flame retardant additive | Hydrolysis inhibitor |
|---|---|---|---|
| Example 1 | Polylactic acid; 83 | Al(OH)₃; 15 | Dicyclohexylc arbodiimide; 2 |
| Example 2 | Polylactic acid; 68 | Al(OH)₃; 30 | Dicyclohexylc arbodiimide; 2 |
| Example 3 | Polylactic acid; 83 | Mg(OH)₂; 15 | Dicyclohexylc arbodiimide; 2 |
| Example 4 | Polylactic acid; 68 | Mg(OH)₂; 30 | Dicyclohexylc arbodiimide; 2 |
| Example 5 | Polylactic acid; 88 | (NH₄)₃(PₙO₃ₙ₊₁)⁽ⁿ⁺²⁾ ; 10 | Dicyclohexylc arbodiimide; 2 |
| Example 6 | Polylactic acid; 78 | (NH₄)₃(PₙO₃ₙ₊₁)⁽ⁿ⁺²⁾ ; 20 | Dicyclohexylc arbodiimide; 2 |
| Example 7 | Polylactic acid; 78 | SiO₂; 20 | Dicyclohexylc arbodiimide; 2 |
| Example 8 | Polylactic acid; 78 | Low-melting point glass; 20 | Dicyclohexylc arbodiimide; 2 |
| Comparative Example 1 | Polylactic acid; 100 | - | - |

| | | | |
|---|---|---|---|
| In the Table, n represents an integer. | | | |

### (Burning test)

A burning test was conducted in accordance with UL-94HB using the above-prepared test specimens. The method is described below. Lines across each specimen were drawn respectively at 25.4 mm and 102 mm from one end of the specimen. The specimen was held at the end farther from the 25.4 mm line so that the longitudinal axis of the specimen was horizontal and the transverse axis was at an angle of 45 degrees. A wire gauze was horizontally held below the specimen so that a gap between the bottom of the specimen and the wire gauze became 9.5 mm and the free end of the specimen and the edge of the wire gauze were on the same line. A burner was placed far from the specimen, and ignited and controlled so as to produce a blue flame having a height of 25 mm. The gas feed and the air inlet of the burner were first adjusted to produce a blue flame having a height of 25 mm and having a yellow flame at the tip, and then the air feed was increased so that the yellow flame at the tip disappeared. The height of the flame was measured again and adjusted to be 25 mm. The flame was applied to the bottomof the free end of the specimen. In this instance, the center axis of the burner tube, which was at an angle of about 45 degrees to the horizontal, and the longitudinal axis of the specimen at the lower edge were on the same vertical plane. The flame was applied to the front end of the specimen in a depth of about 6 mm for 30 seconds without moving the position of the burner, and then the flame was removed from the specimen. When the specimen burned up to the 25.4 mm mark before completion of the flame application for 30 seconds, the flame application was terminated at a point in time when the flame front reached the 25.4 mm mark. When burning continued on the specimen after removing the flame, a time of burning of the specimen between the 25.4 mm mark and the 102 mm mark was measured to determine a burning rate.

The results of the burning test with respect to each of the test specimens obtained in the Examples and Comparative Example are shown below.

**Table 2**

| | |
|---|---|
| | Burning rate |
| Example 1 | Burning stopped before 102 mm mark. |
| Example 2 | Burning stopped before 102 mm mark. |
| Example 3 | Burning stopped before 102 mm mark. |
| Example 4 | Burning stopped before 102 mm mark. |
| Example 5 | Burning stopped before 102 mm mark. |
| Example 6 | Burning stopped before 102 mm mark. |
| Example 7 | 57.4 (mm/min) |
| Example 8 | Burning stopped before 102 mm mark. |
| Comparative Example 1 | 81.2 (mm/min) |
| For reference | 76.2 (mm/min) |

| | |
|---|---|
| In the Table above, the value shown at the "For reference" column is the requirement value of UL-94HB. | |

As can be seen from the Table above, the specimens in Examples 1 to 8 individually have succeeded in imparting flame retardancy to the composition having biodegradability, as compared to the specimen in Comparative Example 1. Further, the burning rate of each of the specimens in Examples 1 to 8 satisfactorily meets the standard requirements of UL-94HB.

### Examples 9 to 11 and Comparative Example 2

The formulations (compound; parts by weight) of the specimens prepared for the Examples and Comparative Example are shown below. Preparations of the specimens were conducted in the same manner as in the above Examples.

**Table 3**

| | Biodegradable resin | Flame retardant additive | Hydrolysis inhibitor |
|---|---|---|---|
| Example 9 | Polylactic acid; 93 | Talc; 5 | Dicyclohexylc arbodiimide; 2 |
| Example 10 | Polylactic acid; 83 | Talc; 15 | Dicyclohexylc arbodiimide; 2 |
| Example 11 | Polylactic acid; 68 | Talc; 30 | Dicyclohexylc arbodiimide; 2 |
| Comparative Example 2 | Polylactic acid; 98 | - | Dicyclohexylc arbodiimide; 2 |

### (Burning test: horizontal)

A horizontal burning test was conducted in accordance with UL-94HB using the above test specimens. The method is described below. Lines across each specimen were drawn respectively at 25.4 mm and 102 mm from one end of the specimen. The specimen was held at the end farther from the 25.4 mm line so that the longitudinal axis of the specimen was horizontal and the transverse axis was at an angle of 45 degrees. A wire gauze was horizontally held below the specimen so that a gap between the bottom of the specimen and the wire gauze became 9.5 mm and the free end of the specimen and the edge of the wire gauze were on the same line. A burner was placed far from the specimen, and ignited and controlled so as to produce a blue flame having a height of 25 mm. The gas feed and the air inlet of the burner were first adjusted to produce a blue flame having a height of 25 mm and having a yellow flame at the tip, and then the air feed was increased so that the yellow flame at the tip disappeared. The height of the flame was measured again and adjusted to be 25 mm. The flame was applied to the bottom of the free end of the specimen. In this instance, the center axis of the burner tube, which was at an angle of about 45 degrees to the horizontal, and the longitudinal axis of the specimen at the lower edge were on the same vertical plane. The flame was applied to the front end of the specimen in a depth of about 6 mm for 30 seconds without moving the position of the burner, and then the flame was removed from the specimen. When the specimen burned up to the 25.4 mm mark before completion of the flame application for 30 seconds, the flame application was terminated at a point in time when the flame front reached the 25.4 mm mark. When burning continued on the specimen after removing the flame, a time of burning of the specimen between the 25.4 mm mark and the 102 mm mark was measured to determine a burning rate.

A 94HB rated material, namely, a material that is classified into 94HB must meet two standard requirements that (a) burning stop before the 102 mmmark, and that (b) the burning rate be 76.2 mm/minute or less.

### (Burning test: vertical)

A vertical burning test was conducted in accordance with UL-94V0 to 2 using the above test specimens. The method is described below. Each specimen was held at 6.4 mm from the top by means of a clamp of a ring stand so that the longitudinal axis of the specimen was vertical and the top of a burner and the horizontal layer of dried surgical absorbent cotton were positioned, respectively, 9. 5 mm and 305 mm below the bottom of the specimen. In preparation of the horizontal layer, an approximately 12.7 mm × 25.4 mm piece was taken out from mass of cotton using a thumb and a forefinger, and the piece of cotton was thinned and spread by the fingers to form a 50.8 mm square having a natural thickness of 6.4 mm.

A burner was placed far from the specimen, and ignited and controlled so as to produce a blue flame having a height of 19 mm. The gas feed and the air inlet of the burner were first adjusted to produce a blue flame having a height of 19 mm and having a yellow flame at the tip, and then the air feed was controlled so that the yellow flame at the tip disappeared. The height of the flame was measured again and adjusted if necessary.

A test flame was applied to the center of the bottom of the test specimen for 10 seconds. Then, the flame was removed at least 152 mm away from the specimen to record a time of flaming combustion. Immediately after the flame on the specimen disappeared, a test flame was applied again to the bottom of the specimen. After another 10 seconds, the flame was removed to record a time of flaming or glowing combustion. When visual inspection is difficult to judge whether flaming or glowing combustion occurs, surgical cotton is brought into contact with the site in question. If the cotton ignites, the combustion is considered flaming. When a melting or flaming material drips from the specimen during the flame application, the burner may be at an angle of 45 degrees during the flame application, and further may be slightly away from any one of the 12.7 mm surfaces of the specimen to prevent the material from dripping into the burner tube. If a melting or flaming material drips from the specimen or continues to burn throughout the test, the burner must be held by a hand to keep a 9.5-mm gap between the bottom of the specimen and the tip of the burner tube during the flame application. All the drips of melting material can be neglected, and a flame must be applied to the center of a specimen.

A 94V-2 rated material, namely, a material that is classified into 94V-2 must meet the following requirements.
(a) Flaming combustion for each specimen does not continue for 30 seconds or more after each flame application.
(b) Total time of flaming combustion after 10 flame applications for a set of 5 specimens is not more than 250 seconds.
(c) Flaming or glowing combustion for each specimen does not reach the holding clamp.
(d) Ignition of dried surgical absorbent cotton placed 305 mm below the specimen caused by flaming drips from the specimen is acceptable.
(e) Glowing combustion for each specimen does not continue for 60 seconds or more after the second removal of flame.

The results of the burning tests with respect to each of the test specimens obtained in Examples 9 to 11 and Comparative Example 2 are shown below.

**Table 4**

| | Horizontal burning test | Vertical burning test |
|---|---|---|
| Example 9 | Burning stopped before 102 mm mark. | UL94-V2; ^{o} |
| Example 10 | Burning stopped before 102 mm mark. | UL94-V2; ^{o} |
| Example 11 | Burning stopped before 102 mm mark. | UL94-V2; ^{o} |
| Comparative Example 2 | 93.5 mm/min | UL94-V2; ^{×} |

In the Table above, the indication "UL94-V2; ^{o}" denotes that the specimen is a 94V-2 rated material, and the indication "UL94-V2; ^{×}" denotes that the specimen is not a 94V-2 rated material.

As can be seen from the Table above, the specimens in Examples 9 to 11 individually have succeeded in imparting flame retardancy to the composition having biodegradability, as compared to the specimen in Comparative Example 2. Further, the burning rate of each of the specimens in Examples 9 to 11 satisfactorily meets the standard requirements of UL-94HB, and satisfactorily meets the standard requirements of UL-94V2.

### Examples 12 to 19 and Comparative Example 3

The formulations (compound; parts by weight) of the specimens prepared for the Examples and Comparative Example are shown below. Preparations of the specimens were conducted in the same manner as in the above Examples.

**Table 5**

| | Biodegradable resin | Flame retardant additive | Hydrolysis inhibitor |
|---|---|---|---|
| Example 12 | Polylactic acid; 93 | Aluminum hydroxide; 5 | Dicyclohexylc arbodiimide; 2 |
| Example 13 | Polylactic acid; 88 | Aluminum hydroxide; 10 | Dicyclohexylc arbodiimide; 2 |
| Example 14 | Polylactic acid; 78 | Aluminum hydroxide; 20 | Dicyclohexylc arbodiimide; 2 |
| Example 15 | Polylactic acid; 68 | Aluminum hydroxide; 30 | Dicyclohexylc arbodiimide; 2 |
| Example 16 | Polylactic acid; 48 | Aluminum hydroxide; 50 | Dicyclohexylc arbodiimide; 2 |
| Example 17 | Polylactic acid; 93 | Magnesium hydroxide; 5 | Dicyclohexylc arbodiimide; 2 |
| Example 18 | Polylactic acid; 73 | Magnesium hydroxide; 25 | Dicyclohexylc arbodiimide; 2 |
| Example 19 | Polylactic acid; 48 | Magnesium hydroxide; 50 | Dicyclohexylc arbodiimide; 2 |
| Comparative Example 3 | Polylactic acid; 98 | - | Dicyclohexylc arbodiimide; 2 |

With respect to each of the test specimens obtained in Examples 12 to 19 and Comparative Example 3, a horizontal burning test and a vertical burning test were individually conducted in the same manner as in the above Examples. The results are shown in the Table below.

**Table 6**

| | Horizontal burning test | Vertical burning test |
|---|---|---|
| Example 12 | Burning stopped before 102 mm mark. | UL94-V2; ^{o} |
| Example 13 | Burning stopped before 102 mm mark. | UL94-V2; ^{o} |
| Example 14 | Burning stopped before 102 mm mark. | UL94-V2; ^{o} |
| Example 15 | Burning stopped before 102 mm mark. | UL94-V2; ^{o} |
| Example 16 | Burning stopped before 102 mm mark. | UL94-V2; ^{o} |
| Example 17 | Burning stopped before 102 mm mark. | UL94-V2; ^{o} |
| Example 18 | Burning stopped before 102 mm mark. | UL94-V2; ^{o} |
| Example 19 | Burning stopped before 102 mm mark. | UL94-V2; ^{o} |
| Comparative Example 3 | 93.5 mm/min | UL94-V2; ^{×} |

In the Table above, the indication "UL94-V2; ^{o} " denotes that the specimen is a 94V-2 rated material, and the indication "UL94-V2; ^{×}" denotes that the specimen is not a 94V-2 rated material.

As can be seen from the Table above, the specimens in Examples 12 to 19 individually have succeeded in imparting flame retardancy to the composition having biodegradability, as compared to the specimen in Comparative Example 3. Further, the burning rate of each of the specimens in Examples 12 to 19 satisfactorily meets the standard requirements of UL-94HB, and satisfactorilymeets the standard requirements of UL-94V2.

By adding to a material comprising a biodegradable polymer compound, such as a biodegradable resin, a flame retardant additive and a hydrolysis inhibitor for the biodegradable polymer compound, a composition having biodegradability and flame retardancy as well as mechanical strength can be obtained. Specifically, the composition of the present invention is advantageous not only in that it has excellent flame retardancy, but also in that the composition disposed of decomposes into substances harmless to living bodies and the environment, for example, alumina, water, carbon dioxide, and the like, so that the composition does not adversely affect the peripheral environment and human body. In addition, by using the composition of the present invention in housings for electrical appliance or packaging materials, satisfactory consideration of the environment is realized, as compared to the conventional one.

## Claims

1. A composition **characterized by** comprising:
one or a plurality of species of organic polymer compound having biodegradability, a flame retardant additive which is a hydroxide compound, a phosphorus compound, or a silica compound,
and a hydrolysis inhibitor for the organic polymer compound having biodegradability.

2. The composition according to Claim 1, **characterized in that**:
the organic polymer compound having biodegradability is either a polysaccharide, an aliphatic polyester, a polyamino acid, polyvinyl alcohol, a polyalkylene glycol, or a copolymer comprising at least one of these compounds.

3. The composition according to Claim 2, **characterized in that**:
the aliphatic polyester is either polylactic acid, polycaprolactone, polyhydroxybutyric acid, polyhydroxyvaleric acid, polyethylene succinate, polybutylene succinate, polybutylene adipate, polymalic acid, a microbiologically synthesized polyester, or a copolymer comprising at least one of these compounds.

4. The composition according to Claim 1, 2 or 3,
**characterized in that**:
the flame retardant additive is a hydroxide compound having a purity of 99.5% or more.

5. The composition according to any one of claims 1 to 4, **characterized in that**:
the flame retardant additive is a particulate hydroxide compound having a BET specific surface area of 5.0 m²/g or less.

6. The composition according to any one of claims 1 to 4, **characterized in that**:
the flame retardant additive is a particulate hydroxide compound having an average particle size of 100 µm or less.

7. The composition according to any one of claims 1 to 3, **characterized in that**:
the flame retardant additive is a silica compound having a silicon dioxide content of 50% or more.

8. The composition according to claim 1, 2, 3 or 7,
**characterized in that**:
the flame retardant additive is a particulate silica compound having an average particle size of 50 µm or less.

9. The composition according to any one of claims 1 to 8, **characterized in that**:
the hydrolysis inhibitor is a carbodiimide compound, an isocyanate compound, or an oxazoline compound.

10. A method for producing the composition according to any one of claims 1 to 9, **characterized by** mixing one or more species of organic polymer compound having biodegradability, a flame retardant additive, and a hydrolysis inhibitor for the organic polymer compound having biodegradability.

11. A shaped article comprising the composition according to any one of claims 1 to 9.

12. The shaped article according to Claim 11,
**characterized in that**:
the shaped article is a housing for electrical appliance.

13. An electrical appliance comprising a part including the composition according to any one of claims 1 to 9 as a constituent.

## Patentansprüche

1. Zusammensetzung, **dadurch gekennzeichnet, dass** sie umfasst:
eine oder eine Mehrzahl von Spezies einer organischen Polymerverbindung mit Biozersetzbarkeit, einen Brandhemmerzusatz, der eine Hydroxidverbindung, eine Phosphorverbindung, oder eine Siliziumdioxidverbindung ist,
und einen Hydrolyseinhibitor für die organische Polymerverbindung mit Biozersetzbarkeit.

2. Zusammensetzung gemäß Anspruch 1, **dadurch gekennzeichnet, dass**:
die organische Polymerverbindung mit Biozersetzbarkeit entweder ein Polysaccharid, ein aliphatischer Polyester, eine Polyaminosäure, Polyvinylalkohol, ein Polyalkylenglykol oder ein Copolymer ist, das zumindest eine dieser Verbindungen umfasst.

3. Zusammensetzung gemäß Anspruch 1, **dadurch gekennzeichnet, dass**:
der aliphatische Polyester entweder Polymilchsäure, Polycaprolacton, Polyhydroxybutansäure, Polyhydroxyvaleriansäure, Polyethylensuccinat, Polybutylensuccinat, Polybutylenadipat, Polyäpfelsäure, ein mikrobiell synthetisierter Polyester oder ein Copolymer ist, das zumindest eine dieser Verbindungen umfasst.

4. Zusammensetzung gemäß Anspruch 1, 2 oder 3, **dadurch gekennzeichnet, dass**:
der Brandhemmerzusatz eine Hydroxidverbindung mit einer Reinheit von 99,5% oder mehr ist.

5. Zusammensetzung gemäß einem der Ansprüche 1 bis 4, **dadurch gekennzeichnet, dass**:
der Brandhemmerzusatz eine partikuläre Hydroxidverbindung mit einer BETapezitischen Oberfläche von 5.0 m²/g oder weniger ist.

6. Zusammensetzung gemäß einem der Ansprüche 1 bis 4, **dadurch gekennzeichnet, dass**:
der Brandhemmerzusatz eine partikuläre Hydroxidverbindung mit einer durchschnittlichen Partikelgröße von 100 µm oder weniger ist.

7. Zusammensetzung gemäß einem der Ansprüche 1 bis 3, **dadurch gekennzeichnet, dass**:
der Brandhemmerzusatz eine Silicaverbindung mit einem Siliziumdioxidgehalt von 50 % oder mehr ist.

8. Zusammensetzung gemäß einem der Ansprüche 1,2, 3 oder 7, **dadurch gekennzeichnet, dass**:
der Brandhemmerzusatz eine partikuläre Silicaverbindung mit einer durchschnittlichen Partikelgröße von 50 µm oder weniger ist.

9. Zusammensetzung gemäß einem der Ansprüche 1 bis 8, **dadurch gekennzeichnet, dass**:
der Hydrolyseinhibitor eine Carbodiimidverbindung, eine Isocyanatverbindung oder eine Oxazolinverbindung ist.

10. Verfahren zur Herstellung der Zusammensetzung gemäß einem der Ansprüche 1 bis 9, **gekennzeichnet durch** Mischen einer oder mehrerer Spezies organischer Polymerverbindung mit Biozersetzbarkeit, eines Brandhemmerzusatzes und eines Hydrolyseinhibitors für die organische Polymerverbindung mit Biozersetzbarkeit.

11. Geformter Artikel, umfassend die Zusammensetzung gemäß einem der Ansprüche 1 bis 9.

12. Geformter Artikel gemäß Anspruch 11, **dadurch gekennzeichnet, dass**:
der geformte Artikel ein Gehäuse für ein Elektrogerät ist.

13. Elektrogerät, umfassend einen Teil, der die Zusammensetzung gemäß einem der Ansprüche 1 bis 9 als Bestandteil enthält.

## Revendications

1. Composition **caractérisée en ce qu'**elle comprend :
une ou une pluralité d'espèces de composé polymère organique ayant une biodégradabilité, un additif ignifuge qui est un composé hydroxyde, un composé de phosphore ou un composé de silice,
et un inhibiteur d'hydrolyse pour le composé polymère organique ayant une biodégradabilité.

2. Composition selon la revendication 1, **caractérisée en ce que**:
le composé polymère organique ayant une biodégradabilité est soit un poly(saccharidc), un poly(ester) aliphatique, un poly(acide aminé), un poly(alcool vinylique), un poly(alkylène glycol), ou un copolymère comprenant au moins un de ces composés.

3. Composition selon la revendication 2, **caractérisée en ce que** :
le poly(ester aliphatique) est soit le poly(acide lactique), la poly(caprolactone), le poly(acide hydroxybutyrique), le poly(acide hydroxyvalérique), le poly(succinate d'éthylène), le poly(succinate de butylène), le poly(adipate de butylène), le poly(acide malique), un poly(ester) synthétisé de manière microbiologique, ou un copolymère comprenant au moins un de ces composés.

4. Composition selon la revendication 1, 2 ou 3, **caractérisée en ce que**:
l'additif ignifuge est un composé hydroxyde ayant une pureté de 99,5 % ou plus.

5. Composition selon l'une quelconque des revendications 1 à 4, **caractérisée en ce que** :
l'additif ignifuge est un composé hydroxyde particulaire ayant une surface spécifique BET de 5,0 m²/g ou moins.

6. Composition selon l'une quelconque des revendications 1 à 4, **caractérisée en ce que** :
l'additif ignifuge est un composé hydroxyde particulaire ayant une taille moyenne de particule de 100 µm ou moins.

7. Composition selon l'une quelconque des revendications 1 à 3, **caractérisée en ce que**:
l'additif ignifuge est un composé de silice ayant une teneur en dioxyde de silicium de 50 % ou plus.

8. Composition selon la revendication 1, 2, 3 ou 7, **caractérisée en ce que** :
l'additif ignifuge est un composé de silice particulaire ayant une taille moyenne de particule de 50 µm ou moins.

9. Composition selon l'une quelconque des revendications 1 à 8, **caractérisée en ce que** :
l'inhibiteur d'hydrolyse est un composé carbodiimide, un composé isocyanate, ou un composé oxazoline.

10. Procédé de production de la composition selon l'une quelconque des revendications 1 à 9, **caractérisé par** l'étape consistant à mélanger une ou plusieurs espèces de composé polymère organique ayant une biodégradabilité, un additif ignifuge, et un inhibiteur d'hydrolyse pour le composé polymère organique ayant une biodégradabilité.

11. Article formé comprenant la composition selon l'une quelconque des revendications 1 à 9.

12. Article formé selon la revendication 11, **caractérisé en ce que** :
l'article formé est un logement pour un appareil électrique.

13. Appareil électrique comprenant une partie comprenant la composition selon l'une quelconque des revendications 1 à 9 en tant que constituant.
